# FASCICULE DE BREVET EUROPEEN

(11) **EP 4 123 499 B1**
(45) Date de publication et mention de la délivrance du brevet: **08.05.2024**
(21) Numéro de dépôt: 22180073.3
(22) Date de dépôt: 21.06.2022
(51) Int. Cl.: G06K 7/14, G06K 17/00, G06Q 10/08, G06K 19/06

(54) **PROCÉDÉ ET SYSTÈME D'IDENTIFICATION D'OUTILS**
VERFAHREN UND SYSTEM ZUR IDENTIFIZIERUNG VON WERKZEUGEN
METHOD AND SYSTEM FOR IDENTIFYING TOOLS

(30) Priorité: 22.07.2021 FR 2107900
(43) Date de publication de la demande: 25.01.2023
(73) Titulaire: AIRBUS HELICOPTERS, 13725 Marignane Cedex (FR)
(72) Inventeur: PITTAU, Serge, 13720 La Bouilladisse (FR); TONTIC, Philippe, 13180 Gignac La Nerthe (FR); MARTINO, Franck, 13110 Port De Bouc (FR)
(74) Mandataire: GPI Brevets

(56) Documents cités:
- WO-A1-2014/167252
- JP-A- 2007 226 488
- US-A- 4 982 627
- US-A1- 2010 217 678
- US-A1- 2013 091 679
- US-A1- 2016 179 909
- US-A1- 2018 225 949

## Description

La présente invention se rapporte au domaine industriel et plus spécifiquement aux domaines de la production et de la maintenance de systèmes mécaniques. La présente invention peut également être étendue à d'autres domaines, tels que le domaine médical par exemple.

La présente invention concerne un procédé d'identification d'outils comportant au moins un symbole à lecture optique ainsi qu'un système d'identification de tels outils.

Le domaine industriel peut nécessiter l'utilisation d'outils de diverses formes et dimensions, tels que par exemple des tournevis, des clés ainsi que des douilles cylindriques ou des embouts pour visseuse. De tels outils sont, par exemple, utilisés dans le domaine de la production et la maintenance de systèmes mécaniques, notamment dans les domaines automobile et aéronautique.

Un risque lié à l'utilisation de tels outils est la perte ou l'oubli d'un outil dans le système mécanique sur lequel travaille un opérateur. La présence d'un tel outil dans un système mécanique peut générer des dommages sur le système mécanique et/ou en altérer le fonctionnement.

Lors de l'assemblage ou la réparation d'un système mécanique, ce risque peut être accru par l'utilisation d'un nombre importants d'outils de tailles et de formes variées.

Des solutions existent pour éviter la perte d'outils.

Toutefois, de telles solutions ne sont pas toujours simples à mettre en place pour les petits outils en particulier, alors que ce sont ces petits outils qui présentent le plus de risques. En effet, au terme d'une intervention sur un système mécanique par exemple, il est plus facile d'oublier un petit outil qu'un outil volumineux.

Une solution de protection consiste par exemple en un aménagement d'une caisse ou d'une desserte à outils afin de faciliter le contrôle visuel de la présence des outils. Cet aménagement peut consister à réaliser des emplacements prédécoupés adaptés à la forme de chaque outil. Le fond de ces emplacements peut aussi être d'une couleur différente que celle de la face apparente afin de pouvoir détecter rapidement l'absence d'un outil d'un simple coup d'oeil. Cependant, cette solution présente certains inconvénients. Notamment, elle n'apporte aucune garantie qu'un outil absent était présent dans la caisse avant l'intervention. Par ailleurs, un outil appartenant à une autre caisse peut aussi prendre la place d'un outil oublié sans qu'il soit de fait détecté par un opérateur.

Une autre solution de protection peut comprendre une identification individuelle et unique de chaque outil par un étiquetage ou une gravure, par exemple d'un code-barres, ou tout autre procédé d'identification. Cette solution s'accompagne d'une procédure contraignante de contrôle systématique par lecture par l'opérateur de l'identification de chacun des outils en début et en fin d'intervention avec éventuellement un pointage sur une liste préétablie. Cette procédure qui peut être chronophage lorsque le nombre d'outils est important, reste dépendante de l'attention de l'opérateur.

Une autre solution de protection consiste à utiliser une caisse à outils dite « intelligente ».

Une caisse à outils intelligente peut, par exemple, être équipée d'un dispositif optique et d'un système d'analyse d'image qui effectue de façon automatique une acquisition d'images à l'ouverture et à la fermeture de chaque tiroir afin de comparer en permanence ces deux images. Chaque outil ayant un emplacement spécifique, le système dispose en permanence d'un état précis des outils présents et des outils absents. Toutefois, les outils n'étant pas identifiés de façon individuelle, deux outils visuellement semblables en termes de forme, de couleur et de dimensions, par exemple une douille de 8mm et une douille de 9mm, ou deux outils identiques issus de deux caisses différentes, ne sont pas discernables par ce système ce qui peut conduire alors à un bilan erroné.

Une caisse à outils intelligente peut aussi être équipée d'un dispositif de lecture sans contact, par exemple utilisant la technologie *RFID* pour la désignation en langue anglaise « Radio Frequency Identification ». Cette technologie utilise des ondes permettant de lire sans contact des informations contenues dans une étiquette électronique compatible, par exemple collée sur chaque outil. Une caisse à outils intelligente équipée d'un système de lecture *RFID,* peut ainsi établir automatiquement un contrôle de la présence ou de l'absence des outils comportant une étiquette électronique *RFID* dans laquelle est préalablement enregistrée l'identité de l'outil. Chaque outil comportant une étiquette électronique *RFID* est sérialisé, à savoir qu'il dispose d'une identification individuelle et unique.

Cependant, la distance de lecture de l'étiquette électronique *RFID* est proportionnelle à la dimension de cette étiquette électronique *RFID.* En conséquence, pour rester lisibles dans les caisses à outils, ces étiquettes électronique *RFID* ont des dimensions minimales de l'ordre de 5x5x10mm et ne sont donc pas applicables aux petits outils, tels que par exemple des douilles, des forets de perçage, des embouts de visseuse...

Le document EP 2309420 décrit un système et un procédé pour améliorer la reconnaissance de codes-barres multiples avec un appareil associé par un traitement d'images. Ce système analyse plusieurs images successives des codes-barres afin dans un premier temps de déterminer le type de codes-barres puis dans un second temps de l'identifier.

Le document US 2018/0225949 décrit un dispositif de détection d'articles manquants dans un contenant tel qu'un sac, une valise, une ceinture à outils, voire un véhicule par exemple. Ce dispositif permet d'identifier des articles présents dans le contenant, de les comparer avec une liste d'articles attendus et d'émettre une alerte si au moins un article attendu est manquant. Le dispositif de détection peut comporter une caméra. L'identification d'un article peut être faite par une puce de type RFID, d'un code-barres ou un QR code. Un article peut aussi être identifié par sa forme, suite à une analyse de l'image et une détection de forme, ou par sa masse.

Le document WO 2014/167252 décrit un dispositif de traçabilité et de suivi d'instruments chirurgicaux, un instrument pouvant être caractérisé par sa forme, suite à un traitement d'une image de l'instrument et par sa masse. Ces caractéristiques peuvent être comparées avec une base de données préétablie pour identifier cet instrument chirurgical. Les instruments peuvent être posés sur une plateforme rétro éclairée afin de mettre en évidence leur forme et leur contour.

Le document US 2010/0217678 décrit un système de reconnaissance visuelle de produits dans une caisse pour mettre à jour par exemple une base de données de stock. Ce système peut comporter une ou plusieurs caméras et un ou plusieurs lecteurs de code-barres. Ce système comporte également un système d'éclairage facilitant l'identification des produits. Chaque produit peut être identifié par ses dimensions et sa forme déterminées par analyse des images captées et/ou par un code-barres lu par au moins un lecteur de code-barres. Une comparaison avec une base de données permet d'identifier le produit.

Le document US 4982627 décrit un système d'identification de divers outils par des marquages, en particulier un code couleur muni d'une série de rainures gravées et colorées s'étendant sur une circonférence complète de l'outil.

Le document US 2013/0091679 décrit un système destiné à identifier et assembler des instruments médicaux. Ce système permet de capter des images des instruments à l'aide d'au moins une caméra et de les comparer avec des données d'images enregistrées dans une base de données pour identifier les instruments médicaux. Les instruments sont identifiés par leur forme, sans qu'ils soient porteurs d'un moyen d'identification, tel un code ou une puce. Le système peut comporter une balance pour contrôler la masse de l'ensemble des instruments présents.

Les documents JP 2007-226488 et US 2016/0179909 font partie de l'arrière plan technologique de l'invention.

La présente invention a alors pour but de proposer un procédé et un dispositif alternatifs de détection et d'identification adaptés aux petits outils.

La présente invention a par exemple pour objet un procédé d'identification d'outils destiné à détecter et identifier des outils ainsi qu'un système d'identification d'outils tels que revendiqués. Tout d'abord, la présente invention a pour objet un procédé d'identification d'outils selon la revendication 1.

Les outils comportent un marquage muni d'au moins un symbole à lecture optique. Un tel symbole peut être unidirectionnel, par exemple un code-barres ou bien bidirectionnel, par exemple un code matriciel désigné également « code-barres à deux dimensions ». Il existe différents types de codes entrant dans la famille des codes matriciels par exemple le « Datamatrix » ou le « QR Code ».

Le procédé selon l'invention est remarquable en ce qu'il comporte les étapes suivantes :
- positionnement de plusieurs outils sur une zone de contrôle,
- capture d'au moins une image de la zone de contrôle par au moins un dispositif de capture d'images, ledit au moins un dispositif de capture d'images couvrant la zone de contrôle,
- détection d'au moins un symbole complet situé sur ladite au moins une image par un traitement d'image effectué par un calculateur,
- identification avec le calculateur d'au moins un outil détecté correspondant audit au moins un symbole complet détecté lors de la détection, et
- détermination d'une liste comprenant chaque outil détecté dudit au moins un outil détecté.

De la sorte, le procédé selon l'invention permet d'identifier simultanément l'ensemble des outils présents sur la zone de contrôle à l'aide de leur symbole à lecture optique.

Le positionnement des outils sur la zone de contrôle se fait par un opérateur, sans prendre de précaution particulière. La zone de contrôle peut être sur une table ou un plan de travail, la zone de contrôle étant située par exemple sous ledit au moins un dispositif de capture d'images. Ainsi, le symbole de chaque outil positionné sur la zone de contrôle est présent sur les images captées par le ou les dispositifs de capture d'images.

Ledit au moins un dispositif de capture d'images peut comporter, par exemple, au moins un appareil photographique ou bien une caméra. Ledit au moins un dispositif de capture d'images peut capter des images dans le domaine visible par un oeil humain et/ou dans le domaine infrarouge et/ou dans le domaine ultraviolet par exemple. Ladite au moins une image peut être enregistrée dans une mémoire reliée au calculateur ou dans une mémoire du calculateur.

Le calculateur applique alors un algorithme de traitement d'image afin dans un premier temps de détecter chaque symbole complet présent sur ladite au moins une image et dans un second temps d'identifier chaque outil présent sur la zone de contrôle grâce à chaque symbole complet détecté sur ladite au moins une image. L'algorithme de traitement d'image peut être stocké dans une mémoire reliée au calculateur ou dans une mémoire du calculateur. En effet, chaque symbole à lecture optique comporte une référence numérique ou alphanumérique à laquelle est associé un outil. Cette référence numérique ou alphanumérique est par exemple représentée sous la forme d'un code-barres ou d'un code matriciel.

Selon l'invention, un unique outil est associé à une unique référence et donc à un unique symbole à lecture optique. Par exemple, deux outils identiques sont associés à deux références distinctes et de fait à deux symboles distincts.

L'association entre les outils, les références numériques ou alphanumériques et, par suite, les symboles à lecture optique peut être sous la forme d'un modèle comportant une nomenclature, un tableau, une base de données ou de tout autre moyen, qui associe les outils et les références. Ce modèle est stocké par exemple dans une mémoire reliée au calculateur ou dans une mémoire du calculateur.

Ce procédé permet au final de déterminer la liste des outils détectés sur la zone de contrôle. Deux listes peuvent ainsi être établies respectivement avant une intervention sur un système mécanique par l'opérateur et après cette intervention sur le système mécanique, permettant notamment d'identifier par comparaison si un ou plusieurs outils ont été oubliés potentiellement dans le système mécanique.

Le procédé selon l'invention peut comprendre une ou plusieurs des caractéristiques qui suivent, prises seules ou en combinaison.

Selon l'invention, le marquage des outils couvre 360° sur une zone périphérique de l'outil.

Selon une première variante, le marquage peut comporter un unique symbole unidirectionnel inscrit en continu sur le marquage et, par suite, sur la zone périphérique de l'outil. Ce symbole unidirectionnel est par exemple un code-barres dont les barres sont donc inscrites en continu sur 360° sur la zone périphérique de l'outil.

Selon une seconde variante, le marquage peut comporter plusieurs symboles identiques séparés par un espace ou non, sur la zone périphérique. Les symboles sont alors inscrits sur la zone périphérique de façon discontinue. L'espace éventuel entre deux symboles ne comporte par exemple aucune inscription permettant ainsi une identification facilitée des limites de chacun des symboles. Le symbole peut être unidirectionnel, par exemple un code-barres, ou bien bidirectionnel, par exemple un code matriciel. Selon cette seconde variante, les symboles peuvent être inscrits sur l'outil selon une seule rangée ou bien sur plusieurs rangées. Les symboles peuvent éventuellement être décalés angulairement sur la zone périphérique entre les rangées lorsque le marquage comporte plusieurs rangées de symboles.

En outre, lorsque la zone périphérique de l'outil comporte plusieurs faces, au moins un symbole peut être inscrit sur chaque face. La zone périphérique de l'outil peut aussi être cylindrique, par exemple lorsqu'elle est située sur une tige d'un tournevis ou bien sur un foret.

De fait, quelle que soit la variante, au moins un symbole inscrit sur l'outil est dans le champ de capture dudit au moins un dispositif de capture d'images quelles que soient sa position et son orientation. En conséquence, au moins un symbole de chaque outil peut être présent sur ladite au moins une image captée par ledit au moins un dispositif de capture d'images permettant ainsi la détection simultanée d'au moins un symbole par outil, et une identification simultanée de tous les outils présents sur la zone de contrôle.

Les dimensions d'un symbole peuvent être, par exemple, de 15mm de long pour un symbole unidirectionnel, tel un code-barres. La hauteur de ce symbole unidirectionnel peut être de 1 millimètre, par exemple pour permettre sa lecture jusqu'à couvrir la totalité de la périphérie d'un outil afin de faciliter sa détection et son identification par le procédé selon l'invention.

Un symbole peut avoir la forme, par exemple, d'un carré de 5 mm par 5 mm ou d'un rectangle de 5 mm par 10 mm pour un symbole bidirectionnel, tel un code matriciel.

Ces exemples de dimensions de symboles unidirectionnels et bidirectionnels peuvent alors comporter par exemple une référence représentée sous la forme d'un code-barres ou d'un code matriciel. Cette référence peut être composée par exemple d'au moins quatre caractères, un caractère pouvant être un chiffre ou une lettre. Des références à quatre caractères permettent généralement d'obtenir un nombre de combinaisons suffisantes pour identifier de façon individuelle et unique la totalité des outils de petites dimensions, voire de dimensions moyennes, utilisables pour des interventions sur un système mécanique, par exemple un aéronef.

En outre, le marquage peut compter une zone dépolie sur laquelle sont inscrits le ou les symboles. Une telle zone dépolie permet de limiter la présence de reflet sur le marquage ou d'atténuer les effets de brillance et de faciliter ainsi la vision du symbole sur ladite au moins une image et, par suite, l'identification de l'outil.

Cette zone dépolie peut être obtenue de façon traditionnelle par abrasion d'une zone destinée au marquage sur l'outil, par exemple par sablage. Toutefois, cette opération de sablage nécessite de protéger les surfaces de l'outil ne devant pas subir de dépolissage. De plus, le sablage peut dégrader, voire supprimer, un traitement de surface ou de protection de l'outil contre certains phénomènes, par exemple la corrosion.

Avantageusement, ce dépolissage peut être obtenu par l'action d'un faisceau laser balayant la zone à dépolir. L'inscription dudit au moins un symbole sur la zone ainsi dépolie est également obtenue par le faisceau ce qui permet de la réaliser dans la continuité du dépolissage, avec le même moyen, le faisceau laser, et sans démontage de l'outil. Le temps nécessaire à la réalisation du dépolissage et du marquage de l'outil est ainsi limité et optimisé.

Ainsi, un procédé de marquage de l'outil peut comporter les étapes suivantes :
- dépolissage d'une zone destinée au marquage sur outil à l'aide d'un faisceau laser, et
- marquage d'au moins un symbole sur la zone dépolie à l'aide du faisceau laser.

Le dépolissage est ainsi réalisé par une première passe du faisceau laser et le marquage dudit au moins un symbole est réalisé par une seconde passe du faisceau laser. Le dépolissage est réalisé avec le faisceau laser utilisé à très faible énergie en émettant moins d'énergie que pour le marquage, à savoir avec une puissance moindre ou une vitesse de balayage plus rapide que pour le marquage.

Comme évoqué précédemment, l'étape de marquage peut comporter l'inscription d'un seul et unique symbole de façon continue sur la zone périphérique de l'outil ou bien l'inscription de plusieurs symboles de façon discontinue sur cette zone périphérique.

Selon un autre exemple, le procédé peut comporter un enregistrement de la liste des outils dans une mémoire reliée au calculateur suite à la détermination de cette liste. Cet enregistrement permet, par exemple, d'utiliser ultérieurement cette liste comme liste de référence afin de vérifier qu'aucun outil n'a été oublié.

Selon un autre exemple, au moins deux dispositifs de capture d'images couvrent conjointement la zone de contrôle, chaque dispositif de capture d'images couvrant une zone de capture, la zone de contrôle étant égale à la surface couverte conjointement par les zones de capture desdits au moins deux dispositifs de capture d'images, et les zones de capture desdits au moins deux dispositifs de capture d'images ont une zone de recouvrement d'une largeur supérieure ou égale à la plus grande dimension d'un symbole.

De la sorte, tout symbole situé au moins en partie sur la zone de recouvrement est présent de façon pleine et entière sur au moins une image captée par un des au moins deux dispositifs de capture d'images. Tout symbole peut par la suite être détecté et l'outil associé peut être identifié.

De fait, les outils présents sur la zone de contrôle peuvent ainsi être détectés et identifiés à l'aide de leurs symboles grâce à une seule image capturée par chaque dispositif de capture d'images.

Selon un autre exemple, le procédé peut comporter un éclairage de la zone de contrôle. Cet éclairage permet de s'assurer que tous les outils et tous les symboles sont clairement visibles sur ladite au moins une image. Cet éclairage permet en particulier d'éclairer un symbole d'un outil pouvant se trouver dans l'ombre d'un autre outil, notamment d'un outil plus volumineux.

Dans ce but, un dispositif d'éclairage peut par exemple être positionné entre ledit au moins un dispositif de capture d'images et la zone de contrôle. Ce dispositif d'éclairage peut comporter une ou plusieurs sources de lumière, des diodes électroluminescentes par exemple.

Selon un autre exemple, le procédé peut comporter les étapes suivantes :
- comparaison avec le calculateur de la liste comprenant chaque outil détecté avec une liste de référence précédemment établie,
- émission d'une alerte si la liste des outils détectés est différente de la liste de référence.

La liste de référence a par exemple été préalablement déterminée et enregistrée à l'aide du procédé selon l'invention avant l'intervention de l'operateur sur le système mécanique.

Une alerte, qui peut être visuelle ou sonore par exemple, est émise si les listes ne comportent pas les mêmes outils. Notamment la liste des outils détectés peut comporter moins d'outils que la liste de référence, au moins un outil ayant potentiellement été alors oublié dans le système ou à proximité. La liste des outils détectés peut également comporter plus d'outils que la liste de référence si des outils provenant d'un autre opérateur ont été pris par l'opérateur. La liste des outils détectés peut encore comporter le même nombre d'outils que la liste de référence, des outils ayant alors été intervertis avec ceux d'un autre opérateur.

L'alerte peut alors uniquement signaler une différence, sans autre précision, l'alerte prenant alors la forme d'un son émis ou de l'allumage d'un voyant par exemple rouge. Le son ou le voyant peut aussi permettre d'identifier le type de différences, à savoir un ou plusieurs outils manquants, un ou plusieurs outils en trop ou un ou plusieurs outils intervertis.

L'alerte peut aussi prendre la forme d'un message affiché sur un écran, indiquant le type de différences, à savoir un ou plusieurs outils manquants, en trop ou intervertis.

Le procédé peut aussi comporter un affichage d'une information relative à cette comparaison quand les listes sont identiques notamment, par exemple via l'allumage d'un voyant vert ou l'affichage d'un message spécifique.

Selon un autre exemple, le procédé peut comporter les étapes suivantes :
- mesure d'une première masse dudit au moins un outil positionné sur la zone de contrôle à l'aide d'une balance,
- calcul d'une seconde masse égale à la somme des masses théorique des outils présents dans la liste par le calculateur, chaque outil étant associé à une masse théorique,
- comparaison de la première masse et de la seconde masse, et
- émission d'une alerte si une différence entre la première masse et la seconde masse est supérieure à un seuil prédéterminé.

De la sorte, un contrôle complémentaire à l'identification par symbole est effectué grâce à la masse de chaque outil. La masse de tous les outils présents sur la zone de contrôle, la zone de contrôle étant alors formée dans ce cas par tout ou partie du plateau de pesée de la balance, est dans ce cas comparée à la somme des masses théoriques de tous les outils identifiés par le procédé selon l'invention.

Une masse théorique est associée à chaque outil et donc au symbole de chaque outil par exemple dans une nomenclature, un tableau, une base de données ou de tout autre moyen, et est par exemple stockée dans une mémoire reliée au calculateur.

Si la première masse diffère de la seconde masse significativement, à savoir d'une valeur supérieure à un seuil prédéterminé, au moins un outil n'a pas été identifié ou a été mal identifié. Ce seuil prédéterminé prend en compte la précision de la balance et éventuellement une masse de graisse, de pâte d'étanchéité ou de salissure par exemple pouvant être présente sur les outils. Ce seuil prédéterminé doit être inférieure à la masse du plus léger outil pouvant être utilisé. Le seuil prédéterminé est par exemple égal à 1 gramme.

Une telle différence entre la première et la seconde masses peut être due à un outil qui n'a pas été identifié si son symbole est au moins partiellement, voire totalement, masqué par un autre outil par exemple ou bien si le symbole a été au moins partiellement, voire totalement, détérioré ou effacé.

Un outil peut aussi être mal identifié si le symbole est détérioré de sorte à ressembler au symbole d'un autre outil.

L'alerte peut être visuelle ou sonore et prendre par exemple la forme d'un son émis ou de l'allumage d'un voyant rouge. L'alerte peut aussi prendre la forme d'un message affiché sur un écran, indiquant l'écart de masse entre la première et la seconde masses. Le procédé peut aussi comporter un affichage d'une information relative à la comparaison des première et seconde masses. Cette étape peut comprendre, par exemple, l'allumage d'un voyant vert ou l'affichage d'un message spécifique lorsque leur différence est inférieure ou égale au seuil prédéterminé.

La présente invention a également pour objet un système d'identification d'outils selon la revendication 10.

Le système d'identification d'outils peut aussi comporter un dispositif d'éclairage positionné entre ledit au moins un dispositif de capture d'images et la zone de contrôle, ce dispositif d'éclairage pouvant comporter une ou plusieurs sources de lumière.

Le système d'identification d'outils peut encore comporter une balance munie d'un plateau de pesée, la zone de contrôle étant située sur le plateau de pesée de la balance.

Le système d'identification d'outils comporte les outils précédemment décrit dont le marquage est agencé pour chaque outil à 360° sur une zone périphérique de l'outil.

L'invention et ses avantages apparaîtront avec plus de détails dans le cadre de la description qui suit avec des exemples de réalisation donnés à titre illustratif en référence aux figures annexées qui représentent :
- la figure 1, une vue en perspective d'un système d'identification d'outils selon l'invention,
- la figure 2, une vue de côté du système d'identification d'outils,
- la figure 3, un schéma synoptique d'un procédé d'identification d'outils,
- la figure 4, une vue de la zone de contrôle comportant des outils,
- la figure 5, une vue de la zone de contrôle comportant des outils rangés dans une boîte,
- la figure 6, une vue simplifiée de la zone de contrôle,
- la figure 7, une vue d'un outil avec un marquage selon l'art antérieur,
- la figure 8, une vue d'un outil avec un marquage selon l'invention,
- la figure 9, une vue d'un outil avec un marquage selon l'invention, et
- la figure 10, un schéma synoptique d'un procédé de marquage d'un outil.

Les éléments présents dans plusieurs figures distinctes sont affectés d'une seule et même référence.

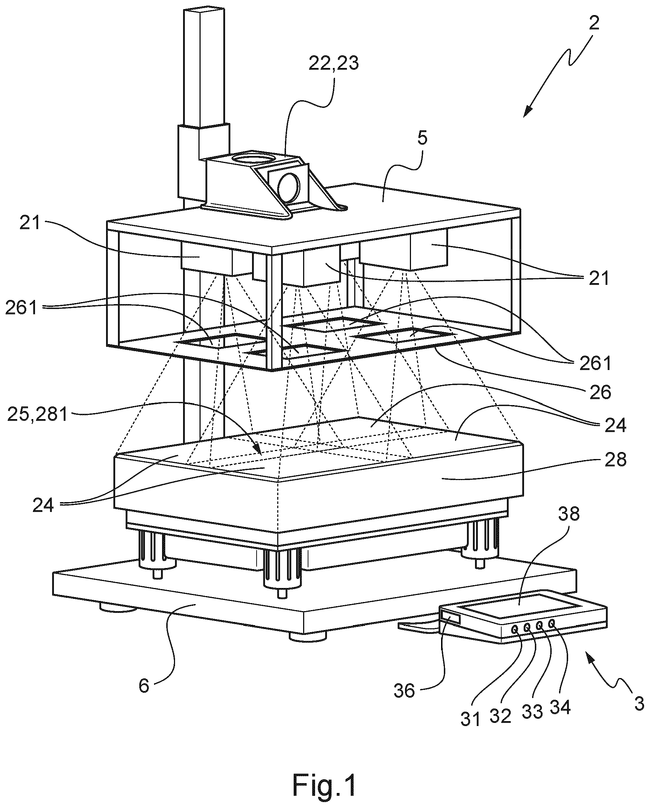

La figure 1 représente un système 2 d'identification d'outils comportant au moins un dispositif de capture d'images 21 et au moins un calculateur 22. Ledit au moins un dispositif de capture d'images 21 couvre une zone de contrôle 25 sur laquelle peuvent être déposés des outils 1 comportant un marquage 11. Chaque marquage 11 est muni d'au moins un symbole 15 en vue de leurs identifications. Un dispositif de capture d'images 21 peut comprendre une caméra ou un appareil photographique.

L'exemple de système 2 d'identification d'outils représenté sur la figure 1 comporte quatre dispositifs de capture d'images 21. Chaque dispositif de capture d'images 21 couvre individuellement et respectivement une zone de capture 24 de sorte que les quatre dispositifs de capture d'images 21 couvrent conjointement la zone de contrôle 25 formée par l'union des quatre zones de capture 24.

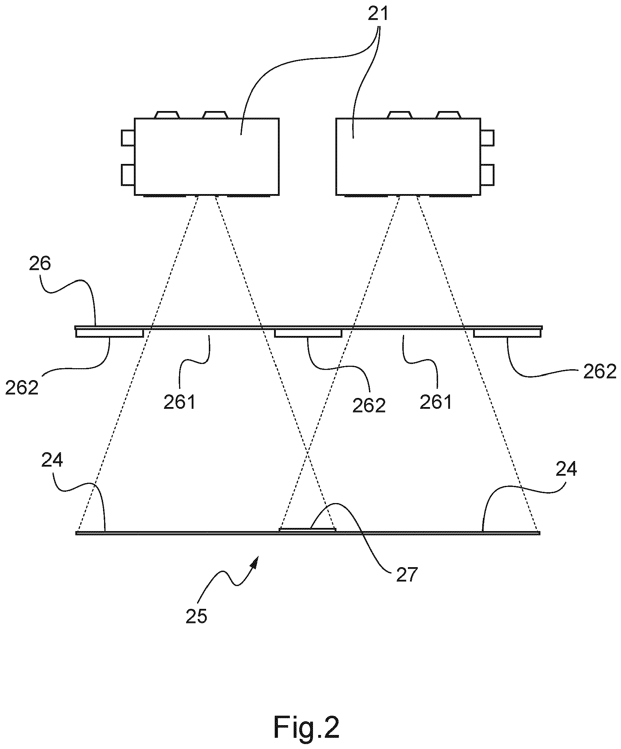

Deux zones de capture 24 adjacentes sont en intersection pour éviter la présence de zones non couvertes par au moins un dispositif de capture d'images 21 comme représenté sur la figure 2.

Chaque dispositif de capture d'images 21 est positionné afin de capter une image comprenant au moins une partie de la zone de contrôle 25. Lorsque le système 2 d'identification d'outils comporte un seul dispositif de capture d'images 21, celui-ci est positionné afin de capter une image comprenant la zone de contrôle 25 en totalité. Chaque dispositif de capture d'images 21 est par exemple positionné au dessus de la zone de contrôle 25 et peut être fixé à une structure 5, cette structure 5 pouvant être posée sur ou fixée à une table 6 ou un plan de travail 6.

Le calculateur 22 peut comporter, par exemple, au moins un processeur et au moins une mémoire 23, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale connue sous l'acronyme DSP, un microcontrôleur...

Le système 2 d'identification d'outils peut également comporter une mémoire 23 reliée au calculateur 22 par une liaison filaire ou non filaire. De plus, le calculateur 22 est relié à chaque dispositif de capture d'images 21 par une liaison filaire ou non filaire de sorte que chaque dispositif de capture d'images 21 puisse transmettre au calculateur 22 les images captées, par l'intermédiaire d'un signal optique ou électrique, sous forme analogique ou numérique. En outre, un calculateur peut être intégré à chaque dispositif de capture d'images 21.

Le système 2 d'identification d'outils peut aussi comporter une interface 3 pouvant comporter des boutons de commande 31,32, des voyants 33,34, un haut-parleur 36 et/ou un écran 38.

Le système 2 d'identification d'outils peut encore comporter un dispositif d'éclairage 26 de la zone de contrôle 25. Ce dispositif d'éclairage 26 peut comporter une ou plusieurs sources de lumières 262 afin d'éclairer la zone de contrôle 25. Une source de lumière 262 peut être par exemple une diode électroluminescence ou une lampe à décharge à basse pression de forme tubulaire et désignée également « tube fluorescent ». Le dispositif d'éclairage 26 est par exemple fixé à la structure 5.

Le dispositif d'éclairage 26 est par exemple positionné entre les dispositifs de capture d'images 21 et ladite zone de contrôle 21 comme représenté sur les figures 1 et 2. Le dispositif d'éclairage 26 comporte alors une ou plusieurs ouvertures 261 pour permettre que la zone de capture 24 de chaque dispositif de capture d'images 21 couvre au moins une partie de la zone de contrôle 25 de sorte que la zone de contrôle 25 soit couverte entièrement conjointement par ces zones de capture 24.

Le système 2 d'identification d'outils peut par ailleurs comporter une balance 28. La balance 28 est positionnée sous le ou les dispositifs de capture d'images 21 de sorte que la zone de contrôle 25 se trouve sur le plateau de pesée 281 de la balance 28. La zone de contrôle 25 peut couvrir entièrement ou partiellement le plateau de pesée 281.

La balance 28 peut être posée sur la table 6 sur laquelle est fixée la structure 5. La structure 5 peut éventuellement être fixée à la balance 28, par exemple à un châssis ou une armature de la balance 28, en remplacement de la fixation à la table 6 éventuellement.

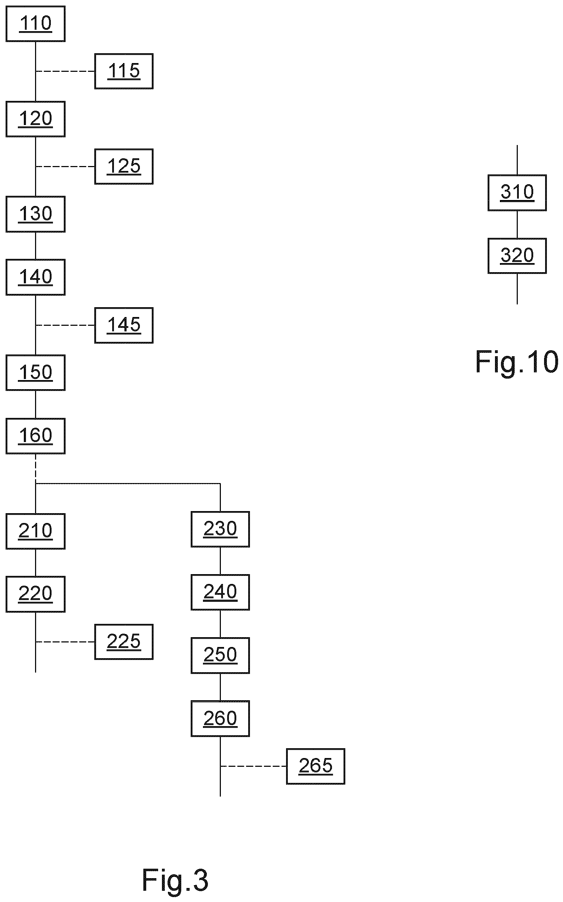

Le système 2 d'identification d'outils est configuré pour la mise en oeuvre d'un procédé d'identification d'outils 1 dont un schéma synoptique est représenté sur la figure 3. La mémoire 23 peut stocker un algorithme pour permettre la réalisation d'un tel procédé d'identification d'outils.

Le procédé d'identification d'outils comporte les étapes suivantes.

Tout d'abord, une étape de positionnement 110 de plusieurs outils 1 sur la zone de contrôle 25 est réalisée, un opérateur positionnant par exemple les outils 1 sur la zone de contrôle 25.

Lorsque l'opérateur a positionné tous les outils 1 sur la zone de contrôle 25, il peut éventuellement actionner un bouton de commande 31 de l'interface 3 pour continuer ou engager le déroulement du procédé d'identification d'outils selon l'invention.

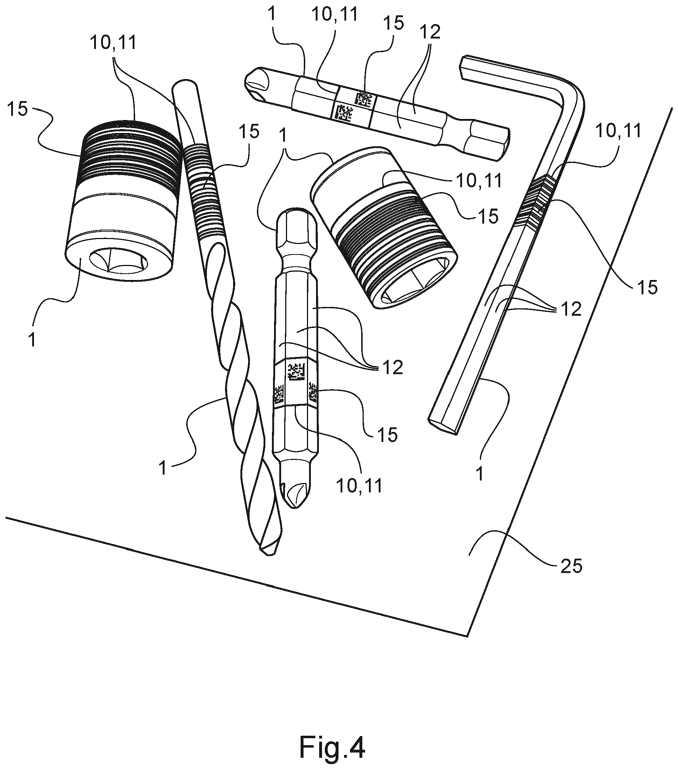

Les outils 1 peuvent être positionnés en vrac et sans précaution particulière, comme représenté sur la figure 4.

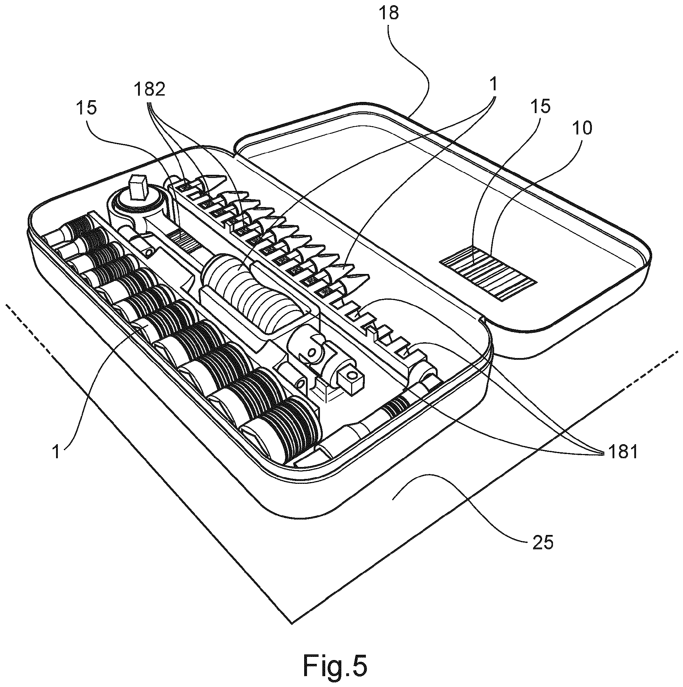

Les outils 1 peuvent également être positionnés sur la zone de contrôle 25 dans une boîte de rangement 18 comportant un emplacement 181 adapté à chaque outil 1 comme représenté sur la figure 5.

Chaque outil 1 comporte un marquage 10 muni d'au moins un symbole 15. Chaque symbole 15 permet une identification de l'outil 1 par lecture optique, une référence spécifique à l'outil 1 étant définie par le symbole 15. Un symbole 15 peut être unidirectionnel, tel un code-barres, ou bien bidirectionnel, tel un code matriciel.

Un symbole 15 peut permettre d'identifier un outil 1 indépendamment de l'opérateur auquel il appartient ou de la boîte de rangement 18 d'où il provient. A titre illustratif, les symboles 15 peuvent ainsi permettre d'identifier par exemple des douilles de 8mm et des douilles de 9mm, mais deux douilles de 8mm porteront le même symbole 15 même si elles sont issues de deux boîtes de rangement 18 différentes.

Un symbole 15 peut également permettre d'identifier de façon unique et individuelle un outil 1. A titre illustratif, les symboles 15 peuvent alors permettre d'identifier des douilles de 8mm et des douilles de 9mm, mais également d'identifier et de différencier deux douilles de 8mm issues de deux boîtes de rangement 18 différentes, ces deux douilles de 8mm portant deux symboles 15 distincts.

La boîte de rangement 18 peut comporter pour chaque emplacement 181 une ouverture 182 adaptée afin qu'au moins un symbole 15 de chaque outil 1 soit visible lorsque l'outil 1 est rangé dans un emplacement 181 adapté pour lui.

Ensuite, une étape de capture 120 d'au moins une image de la zone de contrôle 25 est réalisée par l'intermédiaire dudit au moins un dispositif de capture d'images 21.

Une étape d'éclairage 115 de la zone de contrôle 25 peut être effectuée à l'aide du dispositif d'éclairage 26. Cette étape d'éclairage 115 peut être effectuée uniquement pendant l'étape de capture 120 ou bien être démarrée avant l'étape de capture 120 et être maintenue active pendant, voire après, l'étape de capture 120. Cette étape d'éclairage peut notamment permettre un éclairage homogène et uniforme de toute la zone de contrôle 25 et de tous les outils 1 se trouvant sur la zone de contrôle 25, y compris les outils 1 susceptibles de se trouver dans l'ombre d'un autre outil 1.

Une étape de détection 130 d'au moins un symbole 15 complet situé sur ladite au moins une image est alors effectuée par le calculateur 22 par un traitement d'images. Cette étape de détection 130 comporte l'application d'un traitement d'images par exemple connu afin de détecter un ou plusieurs symboles 15.

Si le système 2 d'identification d'outils comporte un seul dispositif de capture d'images 21, une seule image est traitée par le calculateur 22. Si le système 2 d'identification d'outils comporte plusieurs dispositifs de capture d'images 21, par exemple quatre dispositifs de capture d'images 21, plusieurs images sont traitées par le calculateur 22, par exemple quatre images.

Le procédé d'identification d'outils selon l'invention peut éventuellement comporter une étape intermédiaire de transmission 125 d'un signal porteur de données de ladite au moins une image dudit dispositif de capture d'images 21 vers ledit calculateur 22 effectuée après l'étape de capture 120.

Par ailleurs, le calculateur 22 peut éventuellement comporter plusieurs calculateurs, un calculateur se trouvant par exemple dans chaque dispositif de capture d'images 21 lorsque le système 2 d'identification d'outils comporte plusieurs dispositifs de capture d'images 21. Le calculateur d'un dispositif de capture d'images 21 traite alors uniquement l'image captée par ce dispositif de capture d'images 21. Chaque calculateur transmet ensuite le résultat de cette détection 130 à un calculateur central du calculateur 22, qui peut être un des calculateurs se trouvant dans les dispositifs de capture d'images 21 ou un calculateur supplémentaire dédié.

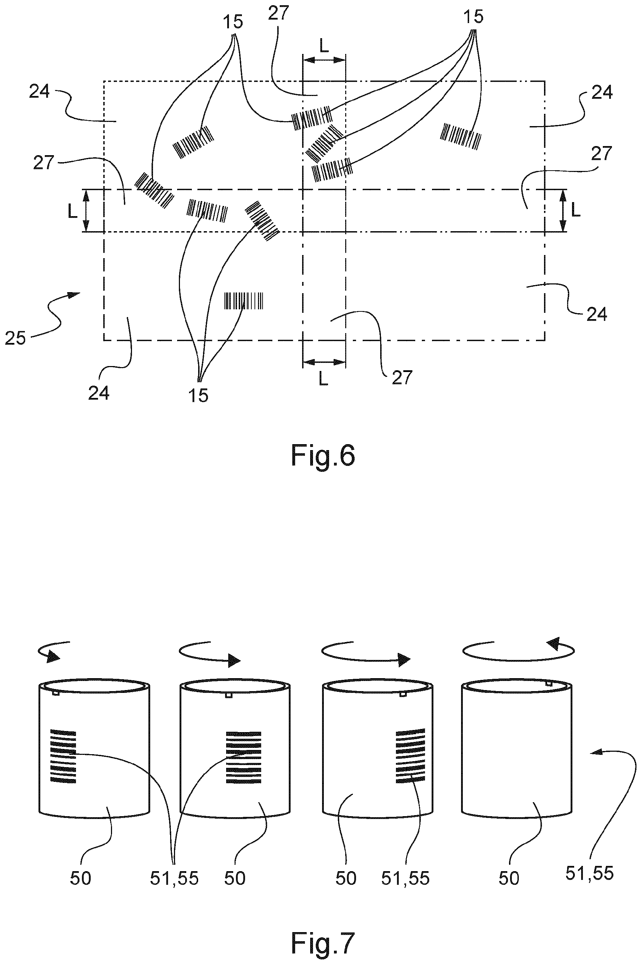

La figure 6 montre une vue simplifiée de la zone de contrôle 25 sur laquelle uniquement un symbole 15 est représenté pour chaque outil 1, les outils 1 n'étant pas représentés. Les limites des zones de capture 24 de chaque dispositif de capture d'images 21 et les limites de la zone de contrôle 25 sont également représentées. La zone de contrôle 25 est formée par quatre zones de capture 24 selon l'exemple représenté et comporte en conséquence quatre zones de recouvrement 27 formées respectivement par les intersections de deux zones de capture 24 adjacentes.

Chaque zone de recouvrement 27 a avantageusement une largeur L supérieure à la plus grande dimension de chaque symbole 15.

On constate ainsi que les symboles 15 qui sont situés en partie sur une zone de recouvrement 27 sont présents sur une première zone de capture 24, et donc sur une première image captée de façon incomplète, et aussi sur une seconde zone de capture 24, et donc sur une seconde image captée de façon pleine et entière et seront donc bien détectés par le procédé d'identification d'outils.

A contrario, les symboles 15 qui sont situés entièrement sur une zone de recouvrement 27 sont présents simultanément sur la première et la seconde zones de capture 24, et donc sur la première et la seconde images captées, de façon pleine et entière et seront donc bien détectés par le procédé d'identification d'outils.

Cependant, une bonne détection des symboles 15 des outils 1 peut être dépendante de l'orientation des outils 1 sur la zone de contrôle 25.

En effet, lorsque le marquage d'un outil 50 est limité à une zone restreinte de sa périphérie, comme indiqué sur la figure 7, le symbole 55 inscrit sur le marquage 51 n'est pas toujours visible entièrement, voire complètement invisible selon l'orientation de l'outil 50. Dans ce cas, sa détection et son identification sont impossibles.

Dans le cadre de l'invention et afin de faciliter la détection d'un symbole 15 et, par suite, l'identification des outils 1, le marquage 10 des outils 1 peut couvrir 360° sur une zone périphérique 11 de l'outil 1. La zone périphérique 11 d'un outil 1 peut être cylindrique ou comporter plusieurs faces 12 en étant par exemple de section triangulaire, carré ou hexagonale par exemple.

Par exemple, le marquage 10 peut comporter un seul symbole 15 inscrit en continu sur 360° sur la zone périphérique 11. Le symbole 15 est dans ce cas unidirectionnel.

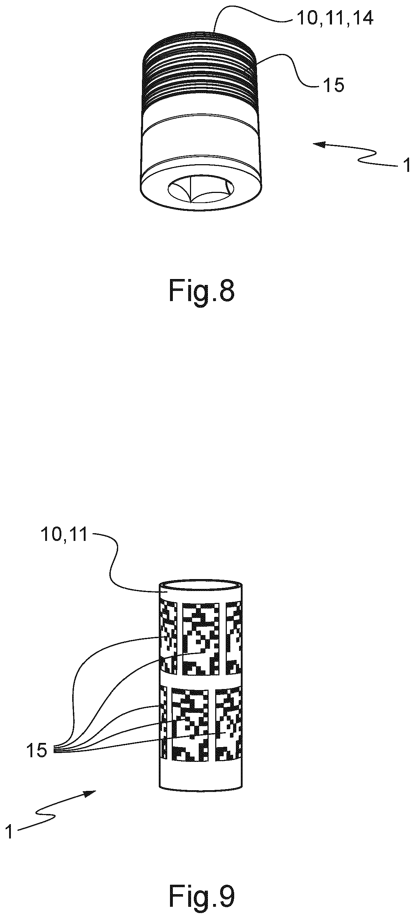

Selon un autre exemple représenté sur la figure 9, le marquage 10 peut comporter plusieurs symboles 15 identiques séparés par un espace sur la zone périphérique 11 comme représenté sur la figure 8. Les symboles 15 peuvent être unidirectionnels ou bidirectionnels. Le marquage 10 peut comporter une ou plusieurs rangées de symboles 15 inscrites sur la zone périphérique 11 de l'outil 1. Lorsque le marquage 10 comporte au moins deux rangées de symboles 15, ces symboles 15 peuvent être décalés angulairement sur la zone périphérique entre deux rangées adjacentes.

Lorsque la zone périphérique 11 comporte plusieurs faces 12 comme représentée sur la figure 4, un ou plusieurs symboles 15, aussi bien unidirectionnels que bidirectionnels par exemple, peuvent être inscrits sur chaque face 12, en fonction des dimensions de ces faces 12. Un symbole 15 peut aussi être inscrit en continu sur 360° sur ces faces 12, sur la zone périphérique 11, le symbole 15 étant alors unidirectionnel.

De la sorte, le marquage 10 comportant un symbole 15 inscrit de façon continue sur la zone périphérique 11 ou plusieurs symboles 15 inscrits de façon discontinue sur cette zone périphérique 11, au moins un symbole 15 ou une partie d'un symbole 15 est visible, détectable et identifiable sans que l'opérateur se soucie de la position et de l'orientation des outils 1 sur la zone de contrôle 25.

De même, dans la boîte de rangement 18, au moins un symbole 15 ou une partie d'un symbole 15 est visible, au travers de l'ouverture 182 pour chaque emplacement 181 sans que l'opérateur positionne ou oriente les outils 1 de façon particulière.

En outre, le marquage 10 peut compter une zone dépolie 14 sur laquelle sont inscrits le ou les symboles 15 afin de faciliter l'identification du symbole 15 et, par suite, de l'outil 1 sur ladite au moins une image en limitant notamment la présence de reflets.

En particulier, cette zone dépolie 14 peut être obtenue par l'action d'un faisceau laser balayant la zone à dépolir et avant que soit inscrit ledit au moins un symbole sur la zone 14 ainsi dépolie à l'aide du même faisceau.

Dans ce but, un procédé de marquage de l'outil dont un schéma synoptique est représenté sur la figure 10 peut être réalisé.

Ce procédé de marquage de l'outil comporte tout d'abord une étape de dépolissage 310 d'une zone destinée au marquage 10 de l'outil 1 à l'aide d'un faisceau laser.

Ce procédé de marquage de l'outil comporte ensuite une étape de marquage 320 d'au moins un symbole 15 sur la zone dépolie 14 à l'aide du faisceau laser.

De la sorte, ces deux étapes 310, 320 peuvent être réalisées dans la continuité l'une de l'autre, sans démontage de l'outil 1 et avec le même faisceau laser, optimisant ainsi le temps nécessaire à ces étapes. De plus, le dépolissage 310 de l'outil 1 peut être facilement contrôlé en régulant, par exemple, l'énergie et/ou la vitesse de balayage du faisceau laser et est ainsi moins agressif pour l'outil 1 qu'un dépolissage par sablage par exemple.

Le dépolissage 310 est, par exemple, réalisé lors d'une première passe du faisceau laser effectuée sur toute la zone destinée au marquage avec le faisceau laser utilisé à faible, voire très faible énergie, éventuellement cumulée avec un très petit pas afin de rendre la zone dépolie 14 obtenue très homogène. Ce dépolissage 310 est ainsi réalisé sans nécessiter d'opération de masquage ni protection des zones à ne pas dépolir contrairement à un dépolissage par sablage par exemple. De plus, ce dépolissage 310 limite voire supprime la dégradation susceptible d'affecter un traitement de surface ou de protection de l'outil 1.

Le marquage 320 peut alors être réalisé lors d'une seconde passe du faisceau laser effectuée avec une énergie supérieure du faisceau laser afin de graver le ou les symboles 15 sur la zone dépolie 14 de l'outil 1. Le marquage 320 est ainsi réalisé avec le faisceau laser utilisé avec une puissance supérieure à la puissance du faisceau laser pour le dépolissage 310 et/ou avec une vitesse de balayage inférieure à la vitesse de balayage du faisceau laser pour le dépolissage 310.

Par ailleurs, après l'étape de détection 130 d'au moins un symbole 15 complet, le procédé d'identification d'outils comporte une étape d'identification 140 avec le calculateur 22 d'au moins un outil 1 détecté correspondant audit au moins un symbole 15 complet détecté.

Lors de cette étape d'identification 140, le calculateur 22 identifie, par un traitement d'image adapté et connu, la référence correspondant à chaque symbole 15 complet détecté sur ladite au moins une image. De plus, chaque outil 1 étant associé à la référence correspondant au symbole 15 inscrit sur l'outil 1, le calculateur 22 peut ainsi identifier chaque outil 1 détecté présent sur la zone de contrôle à l'aide de chaque symbole 15 complet détecté lors de l'étape de détection 130. Cette association peut prendre la forme d'un modèle qui associe les outils 1 et les références au sein d'une nomenclature, d'un tableau, d'une base de données ou de tout autre moyen, stocké dans la mémoire 23. Ce modèle peut aussi comporter une masse théorique à chaque outil 1.

Cette étape d'identification 140 peut comporter une sous-étape de suppression 145 des doublons lorsque deux symboles identiques sont détectés dans une zone de recouvrement 27.

En effet, lorsqu'un symbole 15 est situé entièrement sur une zone de recouvrement 27, il est présent simultanément sur deux zones de capture 24, et donc sur deux images captées. Afin d'éviter d'identifier deux fois un même outil 1, la sous-étape de suppression 145 des doublons permet de prendre en compte une seule fois ce symbole 15, par exemple en le retirant d'une des deux images captées de sorte à identifier une seule fois cet outil 1 au niveau de cette zone de recouvrement 27.

Cette sous-étape de suppression 145 des doublons est utile notamment lorsqu'un symbole 15 identifie un type d'outil 1 indépendamment de l'opérateur auquel il appartient ou de la boîte de rangement 18 d'où il provient, afin d'éviter d'identifier deux outils 1 identiques alors qu'un seul est présent sur la zone de contrôle 25.

Ensuite, une étape de détermination 150 d'une liste comprenant chaque outil 1 détecté parmi ledit au moins un outil 1 détecté est réalisée par le calculateur 22. Cette liste comporte tous les outils 1 détectés et identifiés comme présents sur la zone de contrôle 25.

Cette liste d'outils peut éventuellement être sauvegardée dans la mémoire 23 lors d'une étape d'enregistrement 160 de la liste dans une mémoire 23.

La sous-étape de suppression 145 des doublons peut aussi être effectuée après l'étape de détermination 150. En effet, si un symbole 15 est situé entièrement sur une zone de recouvrement 27 et de fait présent simultanément sur deux zones de capture 24, et donc sur deux images captées, la liste d'outils peut comporter deux fois cet outil 1. La sous-étape de suppression 145 permet alors de supprimer de cette liste d'outils 1 une fois cet outil 1 de sorte qu'il apparaisse une seule fois dans la liste d'outils.

Par exemple, lorsque le procédé d'identification d'outils selon l'invention est appliqué avant une intervention sur un système mécanique par un opérateur, la liste d'outils 1 déposés sur la zone de contrôle 25 ainsi établie et sauvegardée peut servir de liste de référence pour vérifier, après cette intervention, qu'aucun outil n'a été oublié dans le système mécanique ou à proximité du système mécanique, voire échangé avec un autre opérateur.

Dans ce but, l'opérateur applique le procédé selon l'invention après l'intervention, ce procédé comportant deux étapes complémentaires, à savoir une étape de comparaison 210 avec le calculateur 22 de la liste établie lors de l'étape de détermination 150 avec une liste de référence précédemment établie, et une étape d'émission 220 d'une alerte si la liste des outils 1 détectés est différente de la liste de référence.

L'alerte est émise si les listes ne comportent pas les mêmes outils 1. L'alerte peut être visuelle, par l'allumage du voyant 34, éventuellement de couleur rouge, de l'interface 3 par exemple. De manière alternative ou complémentaire, l'alerte peut être sonore par l'émission d'un son via le haut parleur 36 par exemple.

L'alerte peut alternativement prendre la forme d'un message affiché sur l'écran 38 de l'interface 3 pour simplement indiquer que la liste des outils 1 détectés est différente de la liste de référence, ou pour préciser si la liste des outils 1 détectés comporte moins d'outils 1, plus d'outils 1 ou des outils 1 différents que la liste de référence. Ce message peut aussi indiquer la référence de chaque outil 1 manquant et/ou en trop.

L'opérateur peut éventuellement vérifier qu'aucun outil 1 n'est positionné sous ou dans un autre outil 1 et de fait non visible ni identifiable, déplacer éventuellement les outils et relancer si besoin le procédé par l'intermédiaire d'un bouton de commande 31,32. La liste d'outils nouvellement déterminée est ainsi prise en compte, la liste d'outils ayant entraînée l'alerte étant annulée ou supprimée de la mémoire 23 le cas échéant.

Le procédé peut aussi comporter une étape d'affichage 225 d'une information relative à cette comparaison lorsque la liste établie est identique à la liste de référence. Cet affichage d'une information peut prendre la forme par exemple de l'allumage du voyant 33, par exemple de couleur verte, ou l'affichage d'un message spécifique sur l'écran 38.

Le procédé peut également comporter un contrôle par la masse que la liste déterminée des outils 1 présents sur la zone de contrôle 25 est correcte. Dans ce but, le procédé d'identification d'outils selon l'invention comporte les étapes suivantes :
- mesure 230 d'une première masse du au moins un outil 1 positionné sur la zone de contrôle 25 à l'aide de la balance 28,
- calcul 240 d'une seconde masse égale à la somme des masses théoriques des outils 1 présents dans la liste par le calculateur 22,
- comparaison 250 de la première masse et de la seconde masse par le calculateur 22, et
- émission 260 d'une alerte si une différence entre la première masse et la seconde masse est supérieure à un seuil prédéterminé.

Une différence entre la première masse et la seconde masse peut être supérieure au seuil prédéterminé par exemple lorsqu'au moins un outil n'a pas été identifié ou a été mal identifié lors de l'étape d'identification 140, un symbole pouvant être partiellement, voire totalement, masqué par un autre outil ou bien partiellement, voire totalement, détérioré ou effacé ou recouvert par un corps étranger.

Comme précédemment, l'alerte peut être visuelle, par l'allumage du voyant rouge 34 de l'interface 3 par exemple, et/ou sonore par l'émission d'un son via le haut parleur 36 par exemple. L'alerte peut alternativement prendre la forme d'un message affiché sur l'écran 38 de l'interface 3 pour simplement indiquer que la masse des outils 1 présents sur la zone de contrôle 25 est différente de la masse théorique correspondant à la liste des outils 1 détectés, ou pour préciser l'écart de masse entre la première et la seconde masses.

Le procédé peut aussi comporter une étape d'affichage 265 d'une information relative à la comparaison des première et seconde masses. Cet affichage d'une information peut prendre la forme par exemple de l'allumage du voyant vert 33 ou l'affichage d'un message spécifique sur l'écran 38 lorsque leur différence est inférieure ou égale au seuil prédéterminé.

En outre, lorsque les outils 1 sont positionnés sur la zone de contrôle 25 dans une boîte de rangement 18, la boîte de rangement doit également comporter une zone de marquage muni d'au moins un symbole 15 afin que le procédé identifie la boîte de rangement 15, une masse théorique de la boîte de rangement 18 étant alors associée au symbole 15 que comporte cette boîte de rangement 18.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Procédé d'identification d'outils (1), lesdits outils (1) comportant un marquage (10) muni d'au moins un symbole (15) à lecture optique,
ledit procédé comportant les étapes suivantes :
- positionnement (110) de plusieurs outils (1) sur une zone de contrôle (25),
- capture (120) d'au moins une image de ladite zone de contrôle (25) par au moins un dispositif de capture d'images (21), ledit au moins un dispositif de capture d'images (21) couvrant ladite zone de contrôle (25),
- détection (130) d'au moins un symbole (15) complet situé sur ladite au moins une image par un traitement d'image effectué par un calculateur (22),
- identification (140) avec ledit calculateur (22) d'au moins un outil (1) détecté correspondant audit au moins un symbole (15) complet détecté lors de ladite détection (130), et
- détermination(150) d'une liste comprenant ledit au moins un outil (1) détecté,
**caractérisé en ce que** ledit symbole (15) comporte un code-barres ou un code matriciel permettant d'identifier de façon individuelle et unique chaque outil (1), ledit marquage (10) couvrant 360° sur une zone périphérique (11) dudit outil (1).

2. Procédé selon la revendication 1,
**caractérisé en ce que** ledit procédé comporte un enregistrement (160) de ladite liste dans une mémoire (23).

3. Procédé selon l'une quelconque des revendications 1 à 2, **caractérisé en ce que** ledit procédé comporte les étapes suivantes :
- comparaison (210) avec ledit calculateur (22) de ladite liste avec une liste de référence précédemment établie,
- émission (220) d'une alerte si ladite liste desdits outils (1) détectés est différente de ladite liste de référence.

4. Procédé selon l'une quelconque des revendications 1 à 3, **caractérisé en ce que** ledit procédé comporte les étapes suivantes :
- mesure (230) d'une première masse dudit au moins un outil (1) positionné sur ladite zone de contrôle (25) à l'aide d'une balance (28),
- calcul (240) d'une seconde masse égale à la somme des masses théoriques desdits outils (1) présents dans ladite liste par ledit calculateur (22), chaque outil (1) étant associé à une masse théorique,
- comparaison (250) de ladite première masse et de ladite seconde masse, et
- émission (260) d'une alerte si une différence entre ladite première masse et ladite seconde masse est supérieure à un seuil prédéterminé.

5. Procédé selon l'une quelconque des revendications 1 à 4, **caractérisé en ce que** ledit procédé comporte un éclairage (115) de ladite zone de contrôle (25).

6. Procédé selon l'une quelconque des revendications 1 à 5, **caractérisé en ce qu'**au moins deux dispositifs de capture d'images (21) couvrent conjointement ladite zone de contrôle (25), chaque dispositif de capture d'images (21) couvrant une zone de capture, ladite zone de contrôle (25) étant égale à la surface couverte conjointement par lesdites zones de capture desdits au moins deux dispositifs de capture d'images (21), et lesdites zones de capture desdits au moins deux dispositifs de capture d'images (21) ont une zone de recouvrement d'une largeur supérieure ou égale à la plus grande dimension d'un symbole (15).

7. Procédé selon l'une quelconque des revendications 1 à 6, **caractérisé en ce que** ledit marquage (10) comporte plusieurs symboles (15) identiques sur ladite zone périphérique (11).

8. Procédé selon l'une quelconque des revendications 1 à 6, **caractérisé en ce que** ledit marquage (10) comporte un seul symbole (15) unidirectionnel inscrit en continu sur ladite zone périphérique (11).

9. Procédé selon l'une quelconque des revendications 1 à 7, **caractérisé en ce que** ladite zone périphérique (11) comportant plusieurs faces (12), au moins un symbole (15) est inscrit sur chaque face (12).

10. Système (2) d'identification d'outils comportant :
- au moins un dispositif de capture d'images (21), ledit au moins un dispositif de capture d'images (21) couvrant une zone de contrôle (25),
- un calculateur (22), et
- des outils (1) comportant un marquage (10) muni d'au moins un symbole (15) à lecture optique,
**caractérisé en ce que** ledit symbole (15) comporte un code-barres ou un code matriciel permettant d'identifier de façon individuelle et unique chaque outil (1), ledit marquage (10) est agencé pour chaque outil (10) sur 360° sur une zone périphérique (11) dudit outil (1) ledit système (2) étant configuré pour la mise en oeuvre du procédé d'identification d'outils (1) selon l'une quelconque des revendications 1 à 9.

11. Système (2) d'identification d'outils selon la revendication 10, **caractérisé en ce que** ledit système (2) comporte un dispositif d'éclairage (26) positionné entre ledit au moins un dispositif de capture d'images (21) et ladite zone de contrôle (25), ledit dispositif d'éclairage (26) comportant une ou plusieurs sources de lumière.

12. Système (2) d'identification d'outils selon l'une quelconque des revendications 10 à 11,
**caractérisé en ce que** ledit système (2) comporte une balance (28) munie d'un plateau de pesée (281), ladite zone de contrôle (25) étant située sur ledit plateau de pesée (281).

13. Système (2) d'identification d'outils selon l'une quelconque des revendications 10 à 12,
**caractérisé en ce que** ledit marquage (10) comporte plusieurs symboles (15) identiques sur ladite zone périphérique (11).

14. Système (2) d'identification d'outils selon l'une quelconque des revendications 10 à 12,
**caractérisé en ce que** ledit marquage (10) comporte un seul symbole (15) unidirectionnel inscrit en continu sur ladite zone périphérique (11).

15. Système (2) d'identification d'outils selon l'une quelconque des revendications 10 à 13,
**caractérisé en ce que** ladite zone périphérique (11) comporte plusieurs faces (12) et chaque face (12) comporte au moins un symbole (15).

16. Système (2) d'identification d'outils selon l'une quelconque des revendications 10 à 15,
**caractérisé en ce que** ledit marquage (10) comporte au moins deux rangées de symboles (15).

## Patentansprüche

1. Verfahren zum Identifizieren von Werkzeugen (1), wobei die Werkzeuge (1) eine Markierung (10) aufweisen, die mit mindestens einem optisch lesbaren Symbol (15) versehen ist,
wobei das Verfahren die folgenden Schritte umfasst:
- Positionieren (110) mehrerer Werkzeuge (1) in einem Kontrollbereich (25),
- Aufnehmen (120) mindestens eines Bildes des Kontrollbereichs (25) durch mindestens eine Bildaufnahmevorrichtung (21), wobei die mindestens eine Bildaufnahmevorrichtung (21) den Kontrollbereich (25) abdeckt,
- Erkennen (130) mindestens eines vollständigen Symbols (15), das sich in dem mindestens einen Bild befindet, durch eine Bildverarbeitung, die von einem Rechner (22) durchgeführt wird,
- Identifizieren (140) von mindestens einem erkannten Werkzeug (1), das dem mindestens einen bei dem Erkennen (130) erkannten vollständigen Symbol (15) entspricht, durch den Rechner (22), und
- Bestimmen (150) einer Liste, die das mindestens eine erkannte Werkzeug (1) enthält,
**dadurch gekennzeichnet, dass** das Symbol (15) einen Strichcode oder einen Matrixcode umfasst, der es ermöglicht, jedes Werkzeug (1) individuell und eindeutig zu identifizieren, wobei die Markierung (10) auf einem Umfangsbereich (11) des Werkzeugs (1) 360° abdeckt.

2. Verfahren nach Anspruch 1,
**dadurch gekennzeichnet, dass** das Verfahren ein Speichern (160) der Liste in einem Speicher (23) umfasst.

3. Verfahren nach einem der Ansprüche 1 bis 2,
**dadurch gekennzeichnet, dass** das Verfahren die folgenden Schritte umfasst:
- Vergleichen (210) der Liste mit einer zuvor erstellten Referenzliste durch den Rechner (22),
- Ausgeben (220) einer Warnung, wenn sich die Liste der erkannten Werkzeuge (1) von der Referenzliste unterscheidet.

4. Verfahren nach einem der Ansprüche 1 bis 3,
**dadurch gekennzeichnet, dass** das Verfahren die folgenden Schritte umfasst:
- Messen (230) einer ersten Masse des mindestens einen in dem Kontrollbereich (25) positionierten Werkzeugs (1) mithilfe einer Waage (28),
- Berechnen (240) einer zweiten Masse, die gleich der Summe der theoretischen Massen der in der Liste vorhandenen Werkzeuge (1) ist, durch den Rechner (22), wobei jedem Werkzeug (1) eine theoretische Masse zugeordnet ist,
- Vergleichen (250) der ersten Masse und der zweiten Masse, und
- Ausgeben (260) einer Warnung, wenn eine Differenz zwischen der ersten Masse und der zweiten Masse größer als ein vorgegebener Schwellenwert ist.

5. Verfahren nach einem der Ansprüche 1 bis 4,
**dadurch gekennzeichnet, dass** das Verfahren ein Beleuchten (115) des Kontrollbereichs (25) umfasst.

6. Verfahren nach einem der Ansprüche 1 bis 5,
**dadurch gekennzeichnet, dass** mindestens zwei Bildaufnahmevorrichtungen (21) gemeinsam den Kontrollbereich (25) abdecken, wobei jede Bildaufnahmevorrichtung (21) einen Aufnahmebereich abdeckt,
wobei der Kontrollbereich (25) gleich der Fläche ist, die von den Aufnahmebereichen der mindestens zwei Bildaufnahmevorrichtungen (21) gemeinsam abgedeckt wird, und die Aufnahmebereiche der mindestens zwei Bildaufnahmevorrichtungen (21) einen Überlappungsbereich mit einer Breite aufweisen, die größer oder gleich der größten Abmessung eines Symbols (15) ist.

7. Verfahren nach einem der Ansprüche 1 bis 6,
**dadurch gekennzeichnet, dass** die Markierung (10) mehrere identische Symbole (15) auf dem Umfangsbereich (11) umfasst.

8. Verfahren nach einem der Ansprüche 1 bis 6,
**dadurch gekennzeichnet, dass** die Markierung (10) ein einzelnes unidirektionales Symbol (15) umfasst, das kontinuierlich auf den Umfangsbereich (11) geschrieben ist.

9. Verfahren nach einem der Ansprüche 1 bis 7,
**dadurch gekennzeichnet, dass** der Umfangsbereich (11) mehrere Seiten (12) umfasst, wobei auf jeder Seite (12) mindestens ein Symbol (15) geschrieben ist.

10. System (2) zum Identifizieren von Werkzeugen, umfassend:
- mindestens eine Bildaufnahmevorrichtung (21), wobei die mindestens eine Bildaufnahmevorrichtung (21) einen Kontrollbereich (25) abdeckt,
- einen Rechner (22), und
- Werkzeuge (1) mit einer Markierung (10), die mit mindestens einem optisch lesbaren Symbol (15) versehen ist, **dadurch gekennzeichnet, dass** das Symbol (15) einen Strichcode oder einen Matrixcode umfasst, der es ermöglicht, jedes Werkzeug (1) individuell und eindeutig zu identifizieren, wobei die Markierung (10) für jedes Werkzeug (10) auf einem Umfangsbereich (11) des Werkzeugs (1) auf 360° angeordnet ist, wobei das System (2) für die Durchführung des Verfahrens zur Identifizierung von Werkzeugen (1) nach einem der Ansprüche 1 bis 9 konfiguriert ist.

11. System (2) zum Identifizieren von Werkzeugen nach Anspruch 10,
**dadurch gekennzeichnet, dass** das System (2) eine Beleuchtungsvorrichtung (26) umfasst, die zwischen der mindestens einen Bildaufnahmevorrichtung (21) und dem Kontrollbereich (25) positioniert ist, wobei die Beleuchtungsvorrichtung (26) eine oder mehrere Lichtquellen umfasst.

12. System (2) zum Identifizieren von Werkzeugen nach einem der Ansprüche 10 bis 11,
**dadurch gekennzeichnet, dass** das System (2) eine Waage (28) mit einer Wiegeplatte (281) umfasst und der Kontrollbereich (25) sich auf der Wiegeplatte (281) befindet.

13. System (2) zum Identifizieren von Werkzeugen nach einem der Ansprüche 10 bis 12,
**dadurch gekennzeichnet, dass** die Markierung (10) mehrere identische Symbole (15) auf dem Umfangsbereich (11) umfasst.

14. System (2) zum Identifizieren von Werkzeugen nach einem der Ansprüche 10 bis 12,
**dadurch gekennzeichnet, dass** die Markierung (10) ein einzelnes unidirektionales Symbol (15) umfasst, das durchgehend auf dem Umfangsbereich (11) geschrieben ist.

15. System (2) zur Identifizierung von Werkzeugen nach einem der Ansprüche 10 bis 13,
**dadurch gekennzeichnet, dass** der Umfangsbereich (11) mehrere Seiten (12) umfasst und jede Seite (12) mindestens ein Symbol (15) umfasst.

16. Werkzeugidentifikationssystem (2) nach einem der Ansprüche 10 bis 15, **dadurch gekennzeichnet, dass** die Markierung (10) mindestens zwei Reihen von Symbolen (15) umfasst.

## Claims

1. Method for identifying tools (1), said tools (1) comprising a marking (10) provided with at least one optically readable symbol (15),
said method comprising the following steps:
- positioning (110) several tools (1) in a checking area (25),
- capturing (120) at least one image of said checking area (25) by means of at least one image capture device (21), said at least one image capture device (21) covering said checking area (25),
- detecting (130) at least one complete symbol (15) situated in said at least one image by means of an image processing operation carried out by a calculator (22),
- identifying (140) with said calculator (22) at least one detected tool (1) corresponding to said at least one complete symbol (15) detected during said detection (130), and
- determining (150) a list comprising said at least one detected tool (1),
**characterised in that** said symbol (15) comprises a barcode or a matrix code allowing each tool (1) to be identified individually and uniquely, said marking (10) covering 360° in a peripheral region (11) of said tool (1).

2. Method according to claim 1,
**characterised in that** said method comprises a step of recording (160) said list in a memory (23).

3. Method according to any one of claims 1 to 2,
**characterised in that** said method comprises the following steps:
- comparing (210), with said calculator (22), said list with a previously established reference list,
- issuing (220) an alert if said list of said detected tools (1) is different from said reference list.

4. Method according to any one of claims 1 to 3,
**characterised in that** said method comprises the following steps:
- measuring (230) a first mass of said at least one tool (1) positioned in said checking area (25) by means of scales (28),
- calculating (240), with said calculator (22), a second mass equal to the sum of the theoretical masses of said tools (1) present in said list, each tool (1) being associated with a theoretical mass,
- comparing (250) said first mass and said second mass, and
- issuing (260) an alert if a difference between said first mass and said second mass is greater than a predetermined threshold.

5. Method according to any one of claims 1 to 4,
**characterised in that** said method comprises a step of illuminating (115) said checking area (25).

6. Method according to any one of claims 1 to 5,
**characterised in that** at least two image capture devices (21) together cover said checking area (25), each image capture device (21) covering a capture area,
said checking area (25) being equal to the surface area covered together by said capture areas of said at least two image capture devices (21), and said capture areas of said at least two image capture devices (21) having an overlap area with a width greater than or equal to the largest dimension of a symbol (15).

7. Method according to any one of claims 1 to 6, **characterised in that** said marking (10) comprises several identical symbols (15) in said peripheral region (11).

8. Method according to any one of claims 1 to 6, **characterised in that** said marking (10) comprises a single unidirectional symbol (15) imprinted continuously in said peripheral region (11).

9. Method according to any one of claims 1 to 7, **characterised in that** said peripheral region (11) comprises several faces (12) and at least one symbol (15) is imprinted on each face (12).

10. System (2) for identifying tools, comprising:
- at least one image capture device (21), said at least one image capture device (21) covering a checking area (25),
- a calculator (22), and
- tools (1) bearing a marking (10) provided with at least one optically readable symbol (15),
**characterised in that** said symbol (15) comprises a barcode or a matrix code allowing each tool (1) to be identified individually and uniquely, said marking (10) being arranged on each tool (10) over 360° in a peripheral region (11) of said tool (1), said system (2) being configured to implement the method for identifying tools (1) according to any one of claims 1 to 9.

11. System (2) for identifying tools according to claim 10, **characterised in that** said system (2) comprises an illumination device (26) positioned between said at least one image capture device (21) and said checking area (25), said illumination device (26) comprising one or more light sources.

12. System (2) for identifying tools according to any one of claims 10 to 11, **characterised in that** said system (2) comprises scales (28) fitted with a weighing pan (281), said checking area (25) being situated on said weighing pan (281).

13. System (2) for identifying tools according to any one of claims 10 to 12, **characterised in that** said marking (10) comprises several identical symbols (15) in said peripheral region (11).

14. System (2) for identifying tools according to any one of claims 10 to 12, **characterised in that** said marking (10) comprises a single unidirectional symbol (15) imprinted continuously in said peripheral region (11).

15. System (2) for identifying tools according to any one of claims 10 to 13, **characterised in that** said peripheral region (11) comprises several faces (12) and each face (12) comprises at least one symbol (15).

16. System (2) for identifying tools according to any one of claims 10 to 15, **characterised in that** said marking (10) comprises at least two rows of symbols (15).
